# EUROPEAN PATENT APPLICATION

(11) **EP 4 269 366 A1**
(43) Date of publication of application: **01.11.2023**
(21) Application number: 21915261.8
(22) Date of filing: 26.12.2021
(51) Int. Cl.: C03C 3/095, C03C 4/08, C03C 13/00, C03C 13/06, D06M 101/00, G21F 1/06, G21F 3/00, C03C 25/255, C03C 25/30, D06M 13/02, D06M 15/227, D01F 9/08

(54) **INORGANIC COMPOSITION AND FIBERS AND FLAKES THEREOF**

(30) Priority: 28.12.2020 JP 2020219360; 27.09.2021 JP 2021156925
(71) Applicant: Nippon Fiber Corporation, Abiko-City Chiba 270-1162 (JP)
(72) Inventor: FUKAZAWA Hiroshi, Abiko-City Chiba 2701162 (JP)
(74) Representative: Mewburn Ellis LLP
(86) International application number: PCT/JP2021/048446
(87) International publication number: WO 2022/145401

(57) **Abstract**

[Object] Provided are inorganic fibers or inorganic flakes having excellent neutron shielding properties.

[Solution] When a formulation including: a base component containing SiO₂ and Al₂O₃ as main components (provided that the mass ratio occupied by the sum total of SiO₂ and Al₂O₃ in the base component is 0.60 or more); and a neutron shielding component composed of at least one of gadolinium, gadolinium oxide, samarium, samarium oxide, cadmium, or cadmium oxide, are blended at the proportions of 50 to 90 parts by mass of the base component and 10 to 50 parts by mass of the neutron shielding component and melted, satisfactory amorphous inorganic fibers and inorganic flakes were obtained.

## Description

### TECHNICAL FIELD

The present invention relates to an inorganic composition, and fibers and flakes thereof. More particularly, the invention relates to an inorganic composition, and fibers and flakes thereof, all of which have neutron shielding properties and resistance to radiation deterioration.

### BACKGROUND ART

There is an increasing need for neutron shielding materials in nuclear reactor facilities and radiation medicine facilities. For example, in facilities for conducting neutron capture therapy, which has attracted attention in recent years, materials for protecting health care workers from neutron exposure are required. In addition, neutron shielding materials are also required in research facilities that utilize neutron beams for the same reason.

Under such circumstances, attempts have been made to create neutron shielding materials, which are obtained by incorporating neutron shielding elements represented by gadolinium (Gd) and boron (B) into the materials.

For example, in JP 7-138044 A (Patent Document 1) and JP 8-119667 A (Patent Document 2), neutron shielding glasses containing SiO₂, Al₂O₃, B₂O₃, and Li₂O as essential components are disclosed, and in JP 10-226533 A (Patent Document 3), a radiation shielding glass containing B₂O₃, La₂O₃, and Gd₂O₃ as essential components is disclosed. The glasses of Patent Documents 1 to 3 are all produced by casting a raw material into a mold, slowly cooling the raw material, and then forming a plate-shaped glass material. Since these glass materials are intended for use in radiation shielding windows and observation windows, the glass materials have excellent transparency; however, the glass materials themselves are vulnerable to impact. Therefore, there have been restrictions on the use in structures which have a neutron shielding function and are also required to have impact strength.

For this reason, it has been proposed to add a neutron shielding component to a resin material having impact resistance. For example, in JP 6-180388 A (Patent Document 4), a heat-resistant neutron shielding material obtained by blending an inorganic boron compound, gadolinium oxide, and the like as thermal neutron absorbing materials with a phenol resin is proposed. Furthermore, in JP 2006-145421 A (Patent Document 5), a heat-resistant neutron shielding body obtained by blending a powdered boron carbide powder with a phenol resin and solidifying the formulation is proposed. Similarly, in JP 2020-30088 A (Patent Document 6), a resin composition obtained by blending boron carbide, boric acid, gadolinium, or a mixture thereof in a specific particle size range with a curable resin is proposed. In all of the inventions described in Patent Documents 4 to 6, a neutron shielding powder raw material is added to a resin material that originally has strength.

### CITATION LIST

### PATENT DOCUMENT

Patent Document 1: JP 7-138044 A
Patent Document 2: JP 8-119667 A
Patent Document 3: JP 10-226533 A
Patent Document 4: JP 6-180388 A
Patent Document 5: JP 2006-145421 A
Patent Document 6: JP 2020-30088 A

### SUMMARY OF THE INVENTION

### PROBLEM TO BE SOLVED BY THE INVENTION

However, as can be seen from the above-described Patent Documents 4 to 6, when the neutron shielding component added to the resin is a powder, there is a problem that the strength of the resin is decreased as the amount of addition of the neutron shielding component increases. For this reason, the amount of addition of the powdered neutron shielding component that can be added is limited.

Meanwhile, glass fibers and glass flakes are known as reinforcing materials for resins. Glass fibers are effective for improving the strength (particularly, rigidity) of a curable resin or a thermoplastic resin. Furthermore, as with glass fibers, glass flakes not only improve the rigidity of a thermoplastic resin but also have an advantage that the molding anisotropy in strength exhibited by a glass fiber-reinforced thermoplastic resin is low.

Therefore, it is expected that when glass fibers or glass flakes having neutron shielding properties are created, the range of application to neutron shielding structures will be largely expanded.

Thus, the inventors of the invention conducted intensive studies on the subject of developing a new inorganic composition having neutron shielding properties, and fibers and flakes thereof.

### MEANS FOR SOLVING PROBLEM

As a result, the present inventors found that when a gas component containing SiO₂ and Al₂O₃ as main components and a simple substance of a neutron shielding element or an oxide thereof (hereinafter, briefly described as "neutron shielding component") are blended at a ratio of appropriate amounts, a new inorganic composition having neutron shielding properties is obtained, and that the allowable range of addition of a neutron shielding element that can be melt-processed into inorganic fibers and inorganic flakes is narrower than the that of cast-molded glass, thus completing the invention.

The present inventors also found that fly ash can be effectively utilized as a base component, and that when fly ash is used, the upper limit of the amount of addition of the neutron shielding element can be increased by suppressing the content of specific impurities included in the fly ash.

Surprisingly, it was found that the inorganic composition of the invention has not only neutron shielding properties but also resistance to radiation deterioration. As far as the inventors know, there is found no material that has neutron shielding performance as well as resistance to radiation deterioration.

That is, the invention provides an inorganic composition, and fibers and flakes thereof, all of which include:
i) 10% to 50% by mass of at least one of gadolinium, gadolinium oxide, samarium, samarium oxide, cadmium, and cadmium oxide; and 50% to 90% by mass of a remaining component, and in which
ii) a total proportion occupied by SiO₂ and Al₂O₃ in the remaining component is 0.60 or more in terms of mass ratio, and
iii) the inorganic composition, the fibers, and the flakes are amorphous.

The invention will be described in more detail below.

The inorganic composition of the invention, and fibers and flakes thereof (hereinafter, inorganic fibers or inorganic flakes may be referred to as "manufactured product") include 10% to 50% by mass of a "neutron shielding component" and 90% to 50% by mass of a remaining component including SiO₂ and Al₂O₃ as main components. As will be described below, the above-described remaining component is a component that contributes to the formation of an amorphous structure of the inorganic composition of the invention, and fibers and flakes thereof. Therefore, in the following description, the remaining component may be referred to as a glass-forming component in view of its function.

The inorganic composition of the invention, and fibers and flakes thereof are obtained by blending a "glass-forming component" that includes SiO₂ and Al₂O₃ as main components, with a simple substance of a neutron shielding element or an oxide of a neutron shielding element as raw materials, and melt-processing the raw material formulation. Incidentally, according to the invention, no substantial difference can be seen between the component ratio of the raw material formulation and the component ratio of the inorganic composition and fibers and flakes thereof obtainable from a molten material of the raw material formulation. Therefore, the component ratio of the raw material formulation can be applied as the component ratio of the inorganic composition, and fibers and flakes thereof.

A "neutron shielding component" is a component containing the elements of gadolinium, samarium, and cadmium. Hereinafter, the elements of gadolinium, samarium, and cadmium will be briefly referred to as "neutron shielding elements". Since the "neutron shielding elements" have incomparably high neutron shielding performance, the neutron shielding performance of a manufactured product is substantially determined by the content of the "neutron shielding elements". Furthermore, since neutrons are captured by the atomic nuclei of an element, the neutron shielding performance of a manufactured product substantially depends on the net content of the "neutron shielding elements" in the manufactured product. Accordingly, simple substances and oxides of neutron shielding elements may become raw materials.

From the viewpoint of neutron shielding performance, among the "neutron shielding elements", gadolinium or samarium is more preferred, and gadolinium is most preferred.

Incidentally, an isotope or isotope concentrate having excellent neutron shielding properties can be used as the "neutron shielding element". Examples of such an isotope include gadolinium 157 (¹⁵⁷Gd), samarium 149 (¹⁴⁹Sm), and cadmium 113 (¹¹³Cd).

In order to have neutron shielding performance and radiation resistance performance, it is necessary that the inorganic composition of the invention and fibers and flakes thereof include 10% by mass or more, preferably 30% by mass or more, more preferably 35% by mass or more, even more preferably 40% by mass or more, and most preferably 45% by mass or more, of gadolinium, gadolinium oxide, samarium, samarium oxide, cadmium, or cadmium oxide.

However, when more than 50% by mass of gadolinium, gadolinium oxide, samarium, samarium oxide, cadmium, or cadmium oxide is included in the raw material, the viscosity of the molten material becomes too low, and it is difficult to make the raw material into fibers or flakes. At the same time, a molten and solidified material of the raw material has a crystalline phase co-present with an amorphous phase therein, and the strength of the material is decreased. Therefore, the content of the "neutron shielding elements" in the inorganic composition of the invention and fibers and flakes thereof is 50% by mass or less.

According to the invention, the remaining component excluding the "neutron shielding component", that is, the "glass-forming component" is a base component of the inorganic composition of the invention and fibers and flakes thereof and participates in the formation of an amorphous (vitreous) structure of the inorganic composition, and fibers and flakes thereof.

Therefore, the above-described "glass-forming component" must contain SiO₂ and Al₂O₃, which have high glass-forming properties, as main components. More specifically, the mass ratio occupied by the sum total of SiO₂ and Al₂O₃ in the "glass-forming component" is 0.50 or more, preferably 0.60 or more, more preferably 0.65 or more, even more preferably 0.70 or more, and most preferably 0.75 or more.

Furthermore, from the viewpoint of processability of the molten material into fibers or flakes, the mass ratio of SiO₂ with respect to the sum of SiO₂ and Al₂O₃ in the remaining component is preferably in the range of 0.60 to 0.90, more preferably in the range of 0.65 to 0.90, and most preferably in the range of 0.70 to 0.90.

It should be noted that the inorganic composition of the invention and fibers and flakes thereof do not exclude incorporation of unavoidable impurities included in the raw material. Examples of such impurities include Fe₂O₃, CaO, MgO, Na₂O, K₂O, TiO₂, and CrO₂. However, as will be described below, when the content of the "neutron shielding component" is increased, attention must be paid to the content of Fe₂O₃.

The "glass-forming component" is not particularly limited as long as it includes SiO₂ and Al₂O₃ together. Therefore, each of SiO₂ and Al₂O₃ alone can be mixed to form the "glass-forming component"; however, in order to carry out the invention in an industrial scale, rock rich in both the components of SiO₂ and Al₂O₃, fly ash, and the like are inexpensive and can therefore be suitably used.

Examples of the rock described above include volcanic rock represented by basalt. The use of volcanic rock such as basalt requires mining and crushing processes.

In contrast, fly ash is a waste from coal-fired power generation, and fly ash is such that since it is available in the form of powder, a crushing process is unnecessary, and since it is inexpensive, it is suitable as the "glass-forming component". As a similar waste, clinker ash can also be suitably used. In addition to this, a waste produced by Integrated coal Gasification Combined Cycle (IGCC), which is particularly referred to as Coal Gasification Slag (CGS), has a chemical composition almost equivalent to that of conventional fly ash, and therefore, the waste may serve as the "glass-forming component". Since the coal gasification slag is granular, it has an advantage of being more excellent in terms of handleability than conventional fly ash. In the invention, the term fly ash is used to include the coal gasification slag.

Incidentally, the compositions of fly ash and clinker ash vary depending on the raw material coal and the place of generation (power plant and country).

According to the Coal Ash Handbook (edited by Japan Fly Ash Association), the composition (% by mass) of fly ash includes SiO₂: 40.1 to 74.4, Al₂O₃: 15.7 to 35.2, Fe₂O₃: 1.4 to 17.5, CaO: 0.3 to 10.1, and MgO: 0.2 to 7.4, in order of decreasing content. According to this, the fluctuation range of Fe₂O₃ is the largest.

As a result of a series of tests conducted by the inventors of the invention, the following facts were found.

That is, along with an increase in the Fe₂O₃ content as an impurity in the "glass-forming component", the amount of the "neutron shielding component" that can be melt-processed into inorganic fibers or inorganic flakes is decreased. In other words, when the Fe₂O₃ content in the "glass-forming component" is held down, the final composition can contain even more "neutron shielding component", and therefore, inorganic fibers or inorganic flakes having even more excellent neutron shielding performance can be produced.

More specifically, the ratio (mass ratio) occupied by Fe₂O₃ in the "glass-forming component" is preferably 0.30 or less.

When the proportion of the "neutron shielding component" in the composition is 20% by mass or more, the ratio (mass ratio) occupied by Fe₂O₃ in the "glass-forming component" is preferably 0.25 or less.

When the proportion of the "neutron shielding component" in the composition is more than 35% by mass, the ratio (mass ratio) occupied by Fe₂O₃ in the "glass forming component" is preferably less than 0.15.

Therefore, when fly ash or clinker ash is used as the "glass-forming component", it is necessary to pay attention so that the content of Fe₂O₃ satisfies the above-described requirements.

Incidentally, the inorganic composition of the invention and fibers and flakes thereof are amorphous. Since they are amorphous, there is no decrease in strength attributed to the detachment at the interface between a crystalline phase and an amorphous phase.

The determination of whether the inorganic composition, and fibers and flakes thereof are amorphous is based on the fact that only amorphous halo appears in the X-ray diffraction spectrum while peaks of a crystalline phase are not recognized.

The neutron shielding properties of the inorganic composition of the invention and fibers and flakes thereof, can be estimated from a value obtained by calculating the molar fractions of the constituent elements of the inorganic composition and fibers and flakes thereof, and multiplying the total value of the neutron absorption cross-sectional area and the total scattering cross-sectional area of each element by the above-described molar fraction.

In the invention, the superiority of the neutron shielding properties is shown by a value of comparing the neutron shielding properties (N) calculated for the inorganic composition and fibers and flakes thereof, with the neutron shielding properties of lead (N_{pb}), that is, the value of N/N_{pb} (a larger value means more excellent neutron shielding properties).

N = Σfx × (σax + σsx) --- The sum of all the elements X in the inorganic fibers or the inorganic flakes is obtained.

Here,
σrax: Neutron absorption cross-sectional area of element X (unit: 10⁻²⁴ cm²)
σsx: Neutron total scattering cross-sectional area of element X (unit: 10⁻²⁴ cm²)
fx: Molar fraction of element X in the inorganic fibers or inorganic flakes
N_{Pb}: Sum of the neutron absorption cross-sectional area and the neutron total scattering cross-sectional area

For the neutron absorption cross-sectional area (σax), the neutron total scattering cross-sectional area (σsx), and the total value thereof (σax + σsx) of each of the elements (X) constituting the inorganic fibers and the inorganic flakes of the invention, the following values were used (unit was 10⁻²⁴ cm² in all cases). Incidentally, for reference, the values of hydrogen, boron, and lead are also described together.

### <Element name: Neutron absorption cross-sectional area (σax)/neutron total scattering cross-sectional area (σsx)/total value of σax and σsx>

- Boron (B): 767/5/772
- Iron (Fe): 2.6/11.8/14.4
- Krypton (Kr): 25/7.7/32.7
- Cadmium (Cd): 2520/6/2526
- Samarium (Sm): 5670/52/5722
- Gadolinium (Gd): 48890/192/49082
- Lead (Pb): 0.2/11.1/11.3
- Oxygen (O): 0.0/4.2/4.2
- Silicon (Si): 0.2/2.2/2.4
- Aluminum (Al): 0.2/1.5/1.7
- Calcium (Ca): 0.4/3.0/3.4
- Hydrogen (H): 0.3/81.7/82.0

As will be described in detail in the Test Examples, the inorganic fibers and inorganic flakes of the invention have neutron shielding performance that is several dozen times higher than that of conventional glass fibers and glass flakes, and according to a more preferred embodiment, the inorganic fibers and inorganic flakes of the invention have neutron shielding performance that is higher by several hundred times.

In the invention, the inorganic fibers can be produced into an inorganic fiber bundle by attaching a sizing agent to the surface of the inorganic fibers and bundling the inorganic fibers according to a standard method. Further description will be given below on the sizing agent, which is important for forming the inorganic fiber bundle.

As the sizing agent, general-purpose starch-based sizing agents can be used; however, for the inorganic fibers of the invention, a sizing agent composed of a material having a higher hydrogen content than starch (molecular formula: (C₆H₁₀O₅)ₙ) is preferred. Hydrogen has a very high neutron moderation ability based on elastic scattering. Therefore, when the sizing agent is composed of a material having a high hydrogen content, neutrons are further moderated by the sizing agent on the fiber surface, and as a result, the neutron capture efficiency by the "neutron shielding elements" in the inorganic composition of the invention is further increased.

Materials with high hydrogen content that are suitable as sizing agents include:
i) paraffin wax
ii) microcrystalline wax,
iii) polyethylene or an ethylene copolymer mainly based on ethylene, and
iv) polypropylene.

The proportion occupied by hydrogen element in starch is 48% in terms of atomic percentage, whereas the materials of the above-described items i) to iv) all have a proportion occupied by hydrogen element in the material is about 60% or more in terms of atomic percentage. Regarding polyethylene and polypropylene, the proportion of hydrogen element reaches about 67% in terms of atomic percentage.

In regard to the above-described item iii), the ethylene copolymer mainly based on ethylene refers to an ethylene copolymer in which at least 70% by weight of the polymerized units are ethylene units. Examples of a comonomer other than ethylene that constitutes the ethylene copolymer include propylene, 1-butene, 1-pentene, 1-hexene, 1-heptene, and 1-octene.

Furthermore, the polyethylene of the above-described item ii) includes low-molecular weight polyethylene (polyethylene wax), and the polypropylene of the item iv) includes low-molecular weight polypropylene (polypropylene wax) .

As will be described below, the materials listed in the above-described items i) to iv) include modification products that have been subjected to a polarity addition treatment so as to increase the polarity.

The softening temperature, molecular weight, and polarity of the materials with high hydrogen content of the above-described items i) to iv) are important factors in the case where inorganic fibers are used as a filler for resin reinforcement.

Here, the softening temperatures of the above-described materials with high hydrogen content are as follows: i) paraffin wax: 50°C to 60°C, ii) microcrystalline wax: 65°C to 95°C, iii) polyethylene: 115°C to 145°C, and iv) polypropylene: 145°C to 165°C. Therefore, for example, in a case where the heat-resistant temperature of an inorganic fiber-filled resin is emphasized, microcrystalline wax, polyethylene, and polypropylene having higher softening temperature than paraffin wax are preferred, and polypropylene is most preferred.

Furthermore, when the molecular weight of the above-described material with high hydrogen content is larger, the coating film strength of the sizing agent interposed at the interface between the resin and the inorganic fibers increases. Therefore, when the coating film strength is emphasized, low-molecular weight polyethylene (molecular weight: 9000 to 30000) and low-molecular weight polypropylene (molecular weight: 8000 to 40000) are preferred to paraffin wax (molecular weight: 300 to 600) and microcrystalline wax (molecular weight: 400 to 800), and polyethylene and polypropylene, which have higher molecular weights and are usually submitted to molding processing, are more preferred.

Incidentally, since the inorganic fibers of the invention have a surface with high polarity, the adhesive strength between the inorganic fibers and the sizing agent is increased by imparting polarity to the above-described material with high hydrogen content. Polarity can be imparted to paraffin wax and microcrystalline wax by an oxidation treatment. On the other hand, polarity can be imparted to polyethylene (or an ethylene copolymer mainly based on ethylene) and polypropylene by acid-modified copolymerization or acid-modified graft reaction. The acid-modified copolymerization can be achieved by copolymerizing ethylene or propylene with a comonomer having a carboxyl group or a carbonyl group, which is represented by maleic acid or maleic anhydride. The acid-modified graft reaction can be achieved by reacting polyethylene or polypropylene with a monomer having a carboxyl group or a carbonyl group, which is represented by maleic acid or maleic anhydride, in the presence of a peroxide.

Hereinafter, the polyethylene, the ethylene copolymer mainly based on ethylene, and the polypropylene, to which polarity has been imparted by acid-modified copolymerization or acid-modified graft reaction, will be referred to as acid-modified polyethylene, acid-modified ethylene copolymer, and acid-modified polypropylene, respectively.

A sizing agent formed from the above-described material with high hydrogen content is used in the form of an aqueous emulsion (hereinafter, a sizing agent prepared into an aqueous emulsion may be referred to as "sizing agent emulsion"). A sizing agent emulsion is obtained by mixing the above-described material with high hydrogen content with water and a surfactant at a temperature higher than the softening temperature of the material with high hydrogen content, preferably at a temperature higher by 10°C or more than the softening temperature, and even more preferably at a temperature higher by 20°C or more than the softening temperature. When the softening temperature of the material with high hydrogen content is higher than 100°C, mixing is performed under high pressure. On the occasion of mixing, as the molecular weight of the material with high hydrogen content is larger, the mixture is highly viscous even at a temperature equal to or higher than the softening temperature, and therefore, mixing is performed under high shear conditions.

A treatment of attaching a sizing agent to the inorganic fibers is carried out by spraying a sizing agent emulsion on the inorganic fibers or immersing the inorganic fibers in a sizing agent emulsion. Thereafter, the sizing agent-attached inorganic fibers are dried by heating to a temperature equal to or higher than the softening temperature of the material with high hydrogen content, preferably to a temperature higher by 10°C or more than the softening temperature, and more preferably to a temperature higher by 20°C or more than the softening temperature, and thereby an inorganic fiber bundle in which the material with high hydrogen content is firmly attached to the inorganic fiber surface is obtained.

The inorganic fiber bundle obtained in this way is thereafter processed into manufactured products such as chopped strands, rovings, and fiber sheets.

Among these manufactured products, a product produced using polyethylene or an ethylene copolymer mainly based on ethylene is suitable as a filling material of an ethylene resin, a product produced using polypropylene is suitable as a filler material of a propylene resin, and a product produced using an acid-modified polyethylene, an acid-modified ethylene copolymer, or an acid-modified polypropylene is suitable as a filler material of a polyamide resin and a reinforcing material for FRP.

### EFFECT OF THE INVENTION

Fibers or flakes formed from the inorganic composition of the invention impart neutron shielding performance to a material such as a resin or cement by adding the fibers or flakes to the material as a filler. Furthermore, unlike conventional powdered additive materials, the fibers or flakes of the invention also function as a reinforcing material for a resin or cement, due to their shape. In addition, since the fibers or flakes formed from the inorganic composition of the invention also have excellent resistance to radiation deterioration, the function as a reinforcing agent for resins, cement, and coating materials that constitute members that are irradiated with radiation, is retained for a long time period.

The inorganic fibers are processed into chopped strands, rovings, and fiber sheets according to the purpose. Rovings and fiber sheets can be produced into composite materials combined with resins. This increases the degree of freedom in the shape design of an intended article (final manufactured product) that should have both neutron shielding properties and strength. The degree of freedom in the shape brought by the inorganic fibers is an effect that cannot be achieved with plate-shaped cast glass.

On the other hand, when inorganic flakes are added to a resin or a coating material, the inorganic flakes are likely to orient in the form of a layer along a resin molded article surface or a coating film surface, due to the shear force applied during a molding processing process for a resin and during a coating process for a coating material. As a result, the neutron shielding effect is exhibited more effectively.

### BRIEF DESCRIPTION OF DRAWINGS

Fig. 1 is a diagram illustrating an outline of a fiberization test;
Fig. 2 is a diagram illustrating an outline of a flaking test;
Fig. 3 is XRD spectra of Example 10 and Comparative Example 2;
Fig. 4 is a schematic diagram of an apparatus used for positron lifetime measurement;
Fig. 5 is a comparison diagram of positron lifetime spectra before and after irradiation of the inorganic composition of Example 19 with radiation;
Fig. 6 is a comparison diagram of positron lifetime spectra before and after irradiation of the inorganic composition of Comparative Example 6 with radiation;
Fig. 7 is a graph showing the relationship between the content of neutron shielding elements in the composition and the resistance to radiation deterioration; and
Fig. 8 is a comparison photograph of neutron radiography of the inorganic fibers of the invention and the inorganic fibers of the prior art.

### MODE(S) FOR CARRYING OUT THE INVENTION

Hereinafter, the contents of the invention will be specifically described in Test Examples.

In the following Test Examples (Examples and Comparative Examples), the following reagents and raw materials were used.
<Raw materials for glass-forming component>
   · Fly ash: FA1, FA2, FA4, FA5 (obtained domestically and abroad. The components (% by mass) are described in Table 1).
   · Copper slag: CS (obtained domestically. The components (% by mass) are described in Table 1).
   · Volcanic rock: BA (obtained in Japan. The components (% by mass) are described in Table 1).
   · Silica: SiO₂ (reagent, powder)
   · Alumina: Al₂O₃ (reagent, powder)
   · Calcium oxide: CaO (reagent, powder)
   · Calcium carbonate: CaCO₃ (reagent, powder)
   · Iron(III) oxide: Fe₂O₃ (reagent, powder)
   · Magnesium oxide: MgO (reagent, powder)
   · Titanium oxide: TiO₂ (reagent, powder)
   · Potassium carbonate: K₂CO₃ (reagent, powder)
   · Boric acid: H₃BO₃ (reagent, powder)
<Reagents for neutron shielding component>
   · Gadolinium (simple substance): Gd (reagent, powder)
   · Gadolinium oxide: Gd₂O₃ (reagent, powder)
   · Samarium (simple substance): Sm (reagent, powder)
   · Samarium oxide: Sm₂O₃ (reagent, powder)
   · Cadmium (simple substance): Cd (reagent, powder)

**[Table 1]**

| Component | FA1 | FA2 | FA4 | FA5 | BA | CS |
|---|---|---|---|---|---|---|
| Fe₂O₃ (F) | 13 | 9 | 9 | 11 | 19 | 55 |
| SiO₂ (S) | 57 | 54 | 62 | 59 | 46 | 35 |
| Al₂O₃ (A) | 17 | 11 | 18 | 18 | 11 | 5 |
| CaO (C) | 6 | 17 | 3 | 4 | 17 | 2 |
| Others | 7 | 9 | 8 | 8 | 7 | 3 |
| Remarks | Fly ash | | | | Volcanic rock | Copper slag |

Incidentally, the component analysis of FA1, FA2, FA4, FA5, CS, and BA was carried out by a fluorescent X-ray analysis method.

### <Adjustment of raw material formulation>

The raw materials for the glass-forming component and the reagents for the neutron shielding component are weighed at predetermined proportions and mixed in a mortar to prepare a powdered raw material formulation.

### <Fiberization test and evaluation of melt-spinnability>

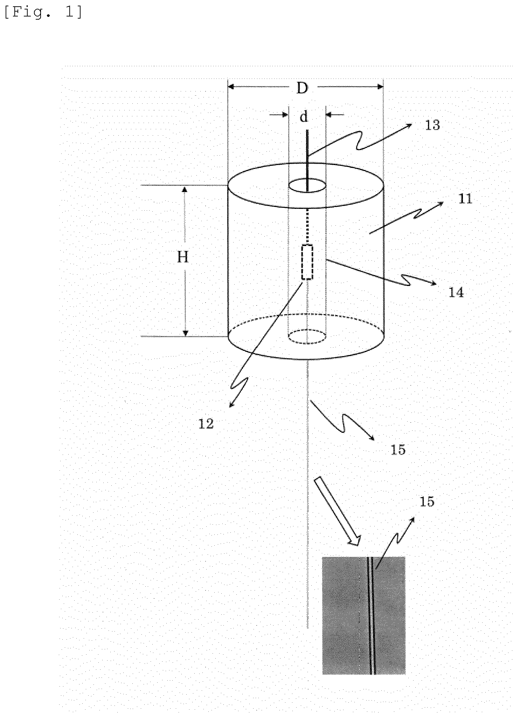

For the raw material formulation, the melt spinnability thereof is evaluated by the following procedure. An outline of the test is shown in Fig. 1. In Fig. 1, an electric furnace (11) has a height (H) of 60 cm and an outer diameter (D) of 50 cm and has an opening part (14) with a diameter (d) of 10 cm at the center. On the other hand, 30 g of the formulation is charged into a Tammann tube (12) having an inner diameter (φ) of 2.1 cm and a length of 10 cm. Incidentally, a hole with a diameter of 2 mm is opened at the center of the bottom part of the Tammann tube (12). During a melting test, the Tammann tube (12) is held at a predetermined position within the opening part (14) of the electric furnace by a hanging rod (13).

The temperature in the electric furnace is raised by a predetermined temperature increase program, and the maximum reach temperature of the temperature inside furnace is set to 1450°C. At this time, it has been confirmed in advance that the temperature inside the Tammann tube (molten material) follows the temperature profile inside the furnace at a temperature lower by approximately 50°C. When the raw material formulation is melted by heating, the raw material formulation flows and falls down from the bottom part of the Tammann tube due to its own weight and solidifies upon contact with the outside air.

In the invention, as an index for the evaluation of melt-spinnability, when the raw material formulation melts before the temperature inside the furnace reaches 1450°C, and the molten material flows and falls down to form a thread, that is, when the melting temperature of the raw material formulation is 1400°C or lower, and the molten material has a melt viscosity appropriate for forming a thread, it was considered as an acceptable level. The melting behavior of the raw material formulation as a sample is roughly classified into the following groups A to C.

### <Evaluation ranking for melt-spinnability>

A: Forms a thread.
B: The sample does not melt, or the viscosity of the molten material is so high that the molten material does not fall down by its own weight, and the sample does not form a thread.
C: The sample melts; however, the viscosity of the molten material is too low, and the sample becomes liquid droplets to drip down and does not form a thread.

### <Flaking test>

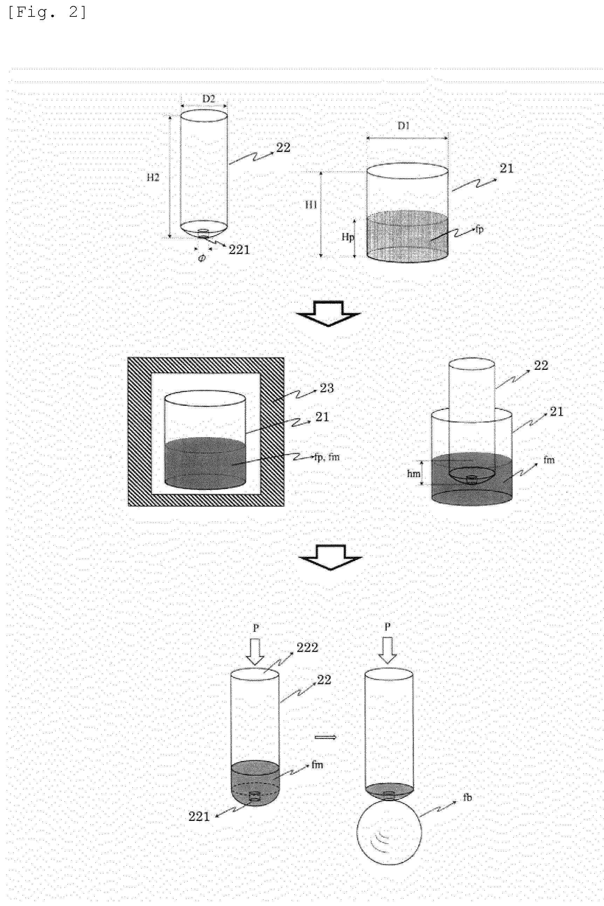

The raw material formulation is submitted to a flaking test (evaluation of flake processability) by the following procedure. An outline of the test is shown in Fig. 2.

The raw material formulation is melted according to the procedure of the following steps 1 to 4, and flaking of the molten material is attempted.

Step 1: About 60 grams of the raw material formulation (fp) is charged into a crucible (21) having a diameter (D1) of 20 mm. Separately, a Tammann tube (22) having a diameter (D2) of 10 mm is prepared. The Tammann tube (22) has an opening part (221) with a hole diameter (Φ) of 2 mm at the bottom part (upper row of Fig. 2).

Step 2: The crucible (21) charged with the formulation (fp) is heated in the electric furnace (23) (left side in the middle row of Fig. 2). The temperature of the electric furnace is raised by a predetermined temperature increase program. The maximum reach temperature of the temperature inside the furnace is set to 1450°C. It has been checked in advance that the temperature inside the crucible (21) and the molten material (fm) follows the temperature profile inside the furnace at a temperature lower by approximately 50°C.

Step 3: The crucible (21) after the temperature increase is immediately taken out from the electric furnace (23), and the Tammann tube (22) is downwardly pressed down from the top of the crucible (21). The inorganic composition molten material (fm) inside the crucible (21) enters into the Tammann tube (22) through the opening part (221) (right side in the middle row of Fig. 2).

Step 4: Next, the Tammann tube (22) storing the molten material (fm) is taken out from the crucible (21), and immediately air is blown at a pressure of about 10 MPa through the mouth part (222) of the tube (left side in the lower row of Fig. 2). When the molten material (fm) has appropriate viscosity, the molten material swells and forms a hollow thin-walled balloon (fb) (right side in the lower row of Fig. 2). The balloon is crushed to obtain flakes.

Based on the results of a flaking test based on the above-described procedure, flake processability is rated as a, b, and c as follows.

### <Evaluation ranking for flake processability>

a: After going through Step 1 to Step 4, a balloon is formed.
b: Since the formulation (fp) does not start melting or the viscosity of the molten material is high even after reaching Step 2, the molten material does not enter into the Tammann tube (22) through the opening part (221) in Step 3.
c: Although Step 1 to Step 3 are reached, since the viscosity of the molten material is low, in Step 4, the molten material (fm) contained in the Tammann tube (22) drips down from the mouth part (222), and a balloon is not formed.

### [Example 1]

30 parts by mass of FA1, 10 parts by mass of FA4, 20 parts by mass of CS, and 30 parts by mass of BA as the glass-forming component, and 10 parts by mass of gadolinium (simple substance) as the neutron shielding component were weighed, and a raw material formulation was prepared.

The components included in the present raw material formulation include gadolinium: 10% by mass, SiO₂: 44% by mass, Al₂O₃: 11% by mass, CaO: 8% by mass, Fe₂O₃: 22% by mass, and others: 5% by mass. The masses of SiO₂, Al₂O₃, CaO, Fe₂O₃, and other components in the glass-forming components as calculated from the blending ratio of each raw material, as well as the total mass ratio occupied by SiO₂ and Al₂O₃ in the glass-forming components, the mass ratio of SiO₂ with respect to the sum total of SiO₂ and Al₂O₃ in the glass-forming components, the mass ratio occupied by Fe₂O₃ in the glass-forming components, and the total mass ratio occupied by SiO₂ and Al₂O₃ in the final composition (inorganic fibers or inorganic flakes) are shown together in Table 2. Incidentally, in the subsequent tables, abbreviated names [S], [A], [C], and [F] will also be used for SiO₂, Al₂O₃, CaO, and Fe₂O₃, respectively.

A fiberization test was carried out for this raw material formulation, and as a result, a yarn having a diameter of about 10 µm was obtained. The obtained yarn had such a strength that the yarn would not be easily cut even when pulled by hand. Incidentally, in the following description, the term "fiber" may be used instead of "yarn"; however, they have the same meaning.

Furthermore, a flake processing test was carried out for this raw material formulation, and as a result, a balloon having a film thickness of about 800 nm was obtained. The balloon was crushed to obtain flakes.

No crystalline peaks are recognized in the X-ray diffraction (XRD) spectra of the fibers and the flakes, and the fibers and the flakes are amorphous. The above-described results are shown in Table 2. Incidentally, in the evaluation of amorphousness in the subsequent tables, the reference symbol "A" indicates that the sample is amorphous, and the reference symbol "B" indicates that crystalline peaks are recognized.

Furthermore, the abundance ratios (mol%) of elements were determined based on the component ratios (% by mass) of the final composition, and the values of the relative neutron shielding rate with respect to lead (N/N_{Pb}) were calculated (bottom row in Table 2).

### [Example 2]

A raw material formulation was prepared in the same manner as in Example 1, except that samarium (simple substance) was used as the neutron shielding component, and a melt-spinning test and a flake processing test were carried out. The results are shown in Table 2. Satisfactory fibers and flakes were formed from the raw material formulation. Furthermore, the fibers and the flakes were amorphous. The value of the relative neutron shielding rate with respect to lead (N/N_{Pb}) was calculated in the same manner as in Example 1 (bottom row in Table 2).

### [Example 3]

A raw material formulation was prepared in the same manner as in Example 1, except that cadmium (simple substance) was used as the neutron shielding component, and a melt-spinning test and a flake processing test were carried out. The results are shown in Table 2. Satisfactory fibers and flakes were formed from the raw material formulation. Furthermore, both the fibers and flakes were amorphous. The value of the relative neutron shielding rate with respect to lead (N/N_{Pb}) was calculated in the same manner as in Example 1 (bottom row in Table 2).

### [Comparative Example 1]

14 parts by mass of FA2, 44 parts by mass of FA5, 22 parts by mass of CS, and 20 parts by mass of BA as the glass-forming component were weighed, and a raw material formulation was prepared.

The components included in the present raw material formulation are SiO₂: 51% by mass, Al₂O₃: 13% by mass, CaO: 8% by mass, Fe₂O₃: 22% by mass, and others: 7% by mass.

A melt-spinning test and a flake processing test were carried out for this raw material formulation. The results are shown in Table 2. Satisfactory fibers and flakes were formed from this raw material formulation. Furthermore, both the fibers and the flakes were amorphous.

Incidentally, since the obtained fibers and flakes do not include neutron shielding components, the relative neutron shielding rate with respect to lead has a very low value such as 3 (bottom row in Table 2).

**[Table 2]**

| Composition | | Abbreviated name, Name | Reference Example (lead) | Example 1 | Example 2 | Example 3 | Comparative Example 1 |
|---|---|---|---|---|---|---|---|
| Raw material blending ratio | Glass-forming component [parts by mass] | FA1 | | 30 | | | |
| | | FA2 | | | | | 14 |
| | | FA4 | | 10 | | | |
| | | FA5 | | | | | 44 |
| | | CS | | 20 | | | 22 |
| | | BA | | 30 | | | 20 |
| | Neutron radiation shielding component [parts by mass] | Gd simple substance | | 10 | | | |
| | | Sm simple substance | | | 10 | | |
| | | Cd simple substance | | | | 10 | |
| | Sum total [parts by mass] | | | 100 | | | |
| Components of final composition | Glass-forming component [% by mass] | SiO₂ [S] | | 44 | | | 51 |
| | | Al₂O₃ [A] | | 11 | | | 13 |
| | | CaO [C] | | 8 | | | 8 |
| | | Fe₂O₃ [F] | | 22 | | | 22 |
| | | Others | | 5 | | | 7 |
| | | Subtotal [WG] | | 90 | | | 100 |
| | Neutron radiation shielding component [% by mass] | Gd element | | 10 | | | 0 |
| | | Sm element | | | 10 | | |
| | | Cd element | | | | 10 | |
| | Mass ratio occupied by [S] + [A] in glass-forming component | | | 0.62 | | | 0.63 |
| | Mass ratio of [S] with respect to [S] + [A] in glass-forming component | | | 0.80 | | | 0.80 |
| | Mass ratio occupied by [F] in glass-forming component | | | 0.24 | | | 0.22 |
| | Mass ratio occupied by [S] + [A] in final composition | | | 0.55 | | | 0.63 |
| Characteristics | Spinnability | | | A | A | A | A |
| | Flake processability | | | a | a | a | a |
| | Amorphousness | | | ○ | ○ | ○ | ○ |
| | Relative neutron radiation shielding rate compared to lead (N/N_{Pb}) | | 1 | 489 | 62 | 37 | 3 |

### [Example 4]

33 parts by mass of FA1, 11 parts by mass of FA2, 6 parts by mass of FA4, 22 parts by mass of CS, and 11 parts by mass of BA as the glass-forming component, and 17 parts by mass of gadolinium (simple substance) as the neutron shielding component were weighed, and a raw material formulation was prepared.

The components included in the present raw material formulation are gadolinium: 17% by mass, SiO₂: 41% by mass, Al₂O₃: 10% by mass, CaO: 6% by mass, Fe₂O₃: 20% by mass, and others: 6% by mass.

A melt-spinning test and a flake processing test were carried out for this raw material formulation. The results are shown in Table 3. Satisfactory fibers and flakes were formed from the raw material formulation. Furthermore, both the fibers and flakes were amorphous.

The value of the relative neutron shielding rate with respect to lead (N/N_{Pb}) was calculated in the same manner as in Example 1 (bottom row in Table 3).

### [Example 5]

70 parts by mass of FA5 as the glass-forming component and 30 parts by mass of gadolinium (simple substance) as the neutron shielding component were weighed, and a raw material formulation was prepared.

The components included in the present raw material formulation are gadolinium: 30% by mass, SiO₂: 42% by mass, Al₂O₃: 13% by mass, CaO: 3% by mass, Fe₂O₃: 8% by mass, and others: 6% by mass.

A melt-spinning test and a flake processing test were carried out for this raw material formulation. The results are shown in Table 3. Satisfactory fibers and flakes were formed from the raw material formulation. Furthermore, both the fibers and the flakes were amorphous.

The value of the relative neutron shielding rate with respect to lead (N/N_{Pb}) was calculated in the same manner as in Example 1 (bottom row in Table 3).

### [Example 6]

65 parts by mass of FA5 as the glass-forming component and 35 parts by mass of gadolinium (simple substance) as the neutron shielding component were weighed, and a raw material formulation was prepared.

The components included in the present raw material formulation are gadolinium: 35% by mass, SiO₂: 39% by mass, Al₂O₃: 12% by mass, CaO: 2% by mass, Fe₂O₃: 7% by mass, and others: 5% by mass.

A melt-spinning test and a flake processing test were carried out for this raw material formulation. The results are shown in Table 3. Satisfactory fibers and flakes were formed from the raw material formulation. Furthermore, both the fibers and the flakes were amorphous.

### [Example 7]

30 parts by mass of FA1, 10 parts by mass of FA2, 5 parts by mass of FA4, 20 parts by mass of CS, and 10 parts by mass of BA as the glass-forming component, and 25 parts by mass of gadolinium oxide (Gd₂O₃) as the neutron shielding component were weighed, and a raw material formulation was prepared.

The components included in the present raw material formulation are gadolinium oxide: 25% by mass, SiO₂: 37% by mass, Al₂O₃: 9% by mass, CaO: 6% by mass, Fe₂O₃: 18% by mass, and others: 4% by mass.

A melt-spinning test and a flake processing test were carried out for this raw material formulation. The results are shown in Table 3. Satisfactory fibers and flakes were formed from the raw material formulation. Furthermore, both the fibers and flakes were amorphous.

The value of the relative neutron shielding rate with respect to lead (N/N_{Pb}) was calculated in the same manner as in Example 1 (bottom row in Table 3).

### [Example 8]

A raw material formulation was prepared in the same manner as in Example 7, except that 15 parts by mass of CS was used, and 30 parts by mass of gadolinium oxide (Gd₂O₃) was used.

The components included in the present raw material formulation are gadolinium oxide: 30% by mass, SiO₂: 36% by mass, Al₂O₃: 9% by mass, CaO: 6% by mass, Fe₂O₃: 16% by mass, and others: 5% by mass.

A melt-spinning test and a flake processing test were carried out for this raw material formulation. The results are shown in Table 3. Satisfactory fibers and flakes were formed from the raw material formulation. Furthermore, both the fibers and flakes were amorphous.

The value of the relative neutron shielding rate with respect to lead (N/N_{Pb}) was calculated in the same manner as in Example 1 (bottom row in Table 3).

### [Example 9]

35 parts by mass of FA1, 5 parts by mass of FA2, 20 parts by mass of CS, and 5 parts by mass of BA as the glass-forming component, and 35 parts by mass of gadolinium oxide as the neutron shielding component were weighed, and a raw material formulation was prepared.

The components included in the present raw material formulation are gadolinium oxide: 35% by mass, SiO₂: 32% by mass, Al₂O₃: 8% by mass, CaO: 4% by mass, Fe₂O₃: 17% by mass, and others: 4% by mass.

A melt-spinning test and a flake processing test were carried out for this raw material formulation. The results are shown in Table 3. Satisfactory fibers and flakes were formed from the raw material formulation. Furthermore, both the fibers and flakes were amorphous.

The value of the relative neutron shielding rate with respect to lead (N/N_{Pb}) was calculated in the same manner as in Example 1 (bottom row in Table 3).

**[Table 3]**

| Composition | | Abbreviated name | Example 4 | Example 5 | Example 6 | Example 7 | Example 8 | Example 9 |
|---|---|---|---|---|---|---|---|---|
| Raw material blending ratio | Glass-forming component [parts by mass] | FA1 | 33 | | | 30 | 30 | 35 |
| | | FA2 | 11 | | | 10 | 10 | 5 |
| | | FA4 | 6 | | | 5 | 5 | |
| | | FA5 | | 70 | 65 | | | |
| | | cs | 22 | | | 20 | 15 | 20 |
| | | BA | 11 | | | 10 | 10 | 5 |
| | Neutron radiation shielding component [parts by mass] | Gd simple substance | 17 | 30 | 35 | | | |
| | | Gd₂O₃ | | | | 25 | 30 | 35 |
| | Sum total [parts by mass] | | 100 | 100 | 100 | 100 | 100 | 100 |
| Components of final composition | Glass-forming component [% by mass] | SiO₂ [S] | 41 | 42 | 39 | 37 | 36 | 32 |
| | | Al₂O₃ [A] | 10 | 13 | 12 | 9 | 9 | 8 |
| | | CaO [C] | 6 | 3 | 2 | 6 | 6 | 4 |
| | | Fe₂O₃ [F] | 20 | 8 | 7 | 18 | 16 | 17 |
| | | Others | 6 | 6 | 5 | 5 | 4 | 4 |
| | | Subtotal [WG] | 83 | 70 | 65 | 75 | 70 | 65 |
| | Neutron radiation shielding component [% by mass] | Gd simple substance | 17 | 30 | 35 | | | |
| | | Gd₂O₃ | | | | 25 | 30 | 35 |
| | Mass ratio occupied by [S] + [A] in glass-forming component | | 0.62 | 0.77 | | 0.62 | 0.63 | 0.62 |
| | Mass ratio of [S] with respect to [S] + [A] in glass-forming component | | 0.80 | 0.77 | | 0.80 | 0.80 | 0.80 |
| | Mass ratio occupied by [F] in glass-forming component | | 0.24 | 0.11 | 0.11 | 0.24 | 0.22 | 0.26 |
| | Mass ratio occupied by [S] + [A] in final composition | | 0.51 | 0.54 | 0.51 | 0.46 | 0.44 | 0.40 |
| Characteristics | Spinnability | | A | A | A | A | A | A |
| | Flake processability | | a | a | a | a | a | a |
| | Amorphousness | | ○ | ○ | ○ | ○ | ○ | ○ |
| | Relative neutron radiation shielding rate compared to lead (N/N_{Pb}) | | 863 | 1566 | 1883 | 1253 | 1561 | 1963 |

### [Example 10]

60 parts by mass of FA5 as the glass-forming component, and 40 parts by mass of gadolinium (simple substance) as the neutron shielding component were weighed, and a raw material formulation was prepared.

The components included in the present raw material formulation are gadolinium: 40% by mass, SiO₂: 36% by mass, Al₂O₃: 11% by mass, CaO: 2% by mass, Fe₂O₃: 6% by mass, and others: 5% by mass. Incidentally, the ratio (mass ratio) occupied by Fe₂O₃ in the glass-forming component is 0.11.

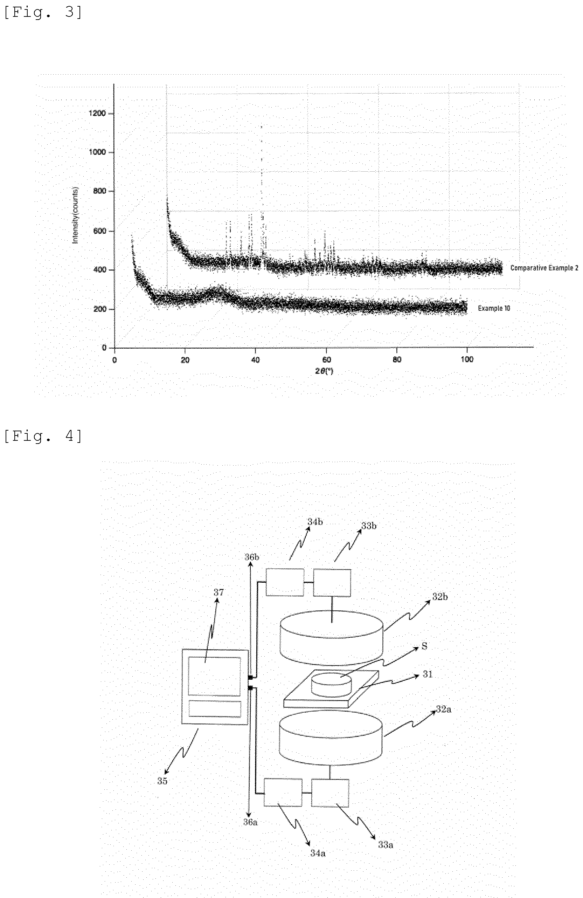

A melt-spinning test and a flake processing test were carried out for this raw material formulation. The results are shown in Table 4. Satisfactory yarns and flakes were formed from the raw material formulation. Furthermore, both the fibers and flakes were amorphous. The XRD spectrum is shown in Fig. 3.

The value of the relative neutron shielding rate with respect to lead (N/N_{Pb}) was calculated in the same manner as in Example 1 (bottom row in Table 4).

### [Comparative Example 2]

A raw material formulation was prepared in the same manner as in Example 10, except that FA1: 30 parts by mass, FA4: 10 parts by mass, and BA: 20 parts by mass were used as the glass-forming component instead of FA5: 60 parts by mass.

The components included in the present raw material formulation are gadolinium: 40% by mass, SiO₂: 33% by mass, Al₂O₃: 9% by mass, CaO: 5% by mass, Fe₂O₃: 9% by mass, and others: 4% by mass. Incidentally, the ratio (mass ratio) occupied by Fe₂O₃ in the glass-forming component is 0.15.

A melt-spinning test and a flake processing test were carried out for this raw material formulation. The results are shown in Table 4. Since the molten material of the present raw material formulation had low melt viscosity, a yarn could not be formed in the melt-spinning test. Similarly, also in the flake processing test, the melt viscosity of the molten material was too low, and a balloon could not be formed. Incidentally, in the XRD spectrum of the molten and solidified material, peaks originating from a crystalline phase were recognized (Fig. 3).

The value of the relative neutron shielding rate with respect to lead (N/N_{Pb}) was calculated in the same manner as in Example 1 (bottom row in Table 4).

### [Example 11]

A raw material formulation was prepared in the same manner as in Example 10, except that gadolinium oxide: 40 parts by mass was used as the neutron shielding component instead of gadolinium simple substance: 40 parts by mass.

The components included in the present raw material formulation are gadolinium oxide: 40% by mass, SiO₂: 36% by mass, Al₂O₃: 11% by mass, CaO: 2% by mass, Fe₂O₃: 6% by mass, and others: 5% by mass. Incidentally, the ratio (mass ratio) occupied by Fe₂O₃ in the glass-forming component is 0.11.

A melt-spinning test and a flake processing test were carried out for this raw material formulation. The results are shown in Table 4. Satisfactory fibers and flakes were formed from the raw material formulation. Furthermore, both the fibers and flakes were amorphous.

The value of the relative neutron shielding rate with respect to lead (N/N_{Pb}) was calculated in the same manner as in Example 1 (bottom row in Table 4).

### [Comparative Example 3]

A raw material formulation was prepared in the same manner as in Example 10, except that FA1: 35 parts by mass, FA2: 5 parts by mass, CS: 13 parts by mass, and BA: 8 parts by mass were used as the glass-forming component instead of FA5: 60 parts by mass.

The components included in the present raw material formulation are gadolinium oxide: 40% by mass, SiO₂: 31% by mass, Al₂O₃: 8% by mass, CaO: 4% by mass, Fe₂O₃: 14% by mass, and others: 3% by mass. Incidentally, the ratio (mass ratio) occupied by Fe₂O₃ in the glass-forming component is 0.23.

A melt-spinning test and a flake processing test were carried out for this raw material formulation. The results are shown in Table 4. Since the molten material of the present raw material formulation had low melt viscosity, a yarn could not be formed in the melt-spinning test. Similarly, also in the flake processing test, the melt viscosity of the molten material was too low, and a balloon could not be formed. Incidentally, from the XRD analysis, it was found that the molten material included a crystalline component.

The value of the relative neutron shielding rate with respect to lead (N/N_{Pb}) was calculated in the same manner as in Example 1 (bottom row in Table 4).

### [Example 12]

55 parts by mass of FA5 as the glass-forming component and 45 parts by mass of gadolinium oxide as the neutron shielding component were weighed, and a raw material formulation was prepared.

The components included in the present raw material formulation are gadolinium oxide: 40% by mass, SiO₂: 33% by mass, Al₂O₃: 10% by mass, CaO: 2% by mass, Fe₂0₃: 6% by mass, and others: 5% by mass. Incidentally, the ratio (mass ratio) occupied by Fe₂O₃ in the glass-forming component is 0.11.

A melt-spinning test and a flake processing test were carried out for this raw material formulation. The results are shown in Table 4. Satisfactory fibers and flakes were formed from the raw material formulation. Furthermore, both the fibers and flakes were amorphous.

The value of the relative neutron shielding rate with respect to lead (N/N_{Pb}) was calculated in the same manner as in Example 1 (bottom row in Table 4).

### [Comparative Example 4]

40 parts by mass of FA5 as the glass-forming component and 60 parts by mass of gadolinium oxide as the neutron shielding component were weighed, and a raw material formulation was prepared.

The components included in the present raw material formulation are gadolinium oxide: 60% by mass, SiO₂: 24% by mass, Al₂O₃: 7% by mass, CaO: 1% by mass, Fe₂O₃: 4% by mass, and others: 3% by mass. Incidentally, the ratio (mass ratio) occupied by Fe₂O₃ in the glass-forming component is 0.11.

A melt-spinning test and a flake processing test were carried out for this raw material formulation. The results are shown in Table 4. Since the molten material of the present raw material formulation had low melt viscosity, a yarn could not be formed in the melt-spinning test. Similarly, also in the flake processing test, the melt viscosity of the molten material was too low, and a balloon could not be formed. Incidentally, from the XRD analysis, it was found that the molten material included a crystalline component.

The value of the relative neutron shielding rate with respect to lead (N/N_{Pb}) was calculated in the same manner as in Example 1 (bottom row in Table 4).

**[Table 4]**

| Composition | | Abbreviated name | Example 10 | Comparative Example 2 | Example 11 | Comparative Example 3 | Example 12 | Comparative Example 4 |
|---|---|---|---|---|---|---|---|---|
| Raw material blending ratio | Glass-forming component [parts by mass] | FA1 | | 30 | | 35 | | |
| | | FA2 | | | | 5 | | |
| | | FA4 | | 10 | | | | |
| | | FA5 | 60 | | 60 | | 55 | 40 |
| | | CS | | | | 13 | | |
| | | BA | | 20 | | 8 | | |
| | Neutron radiation shielding component [parts by mass] | Gd simple substance | 40 | 40 | | | | |
| | | Gd₂O₃ | | | 40 | 40 | 45 | 60 |
| | Sum total [parts by mass] | | 100 | 100 | 100 | 100 | 100 | 100 |
| Components of final composition | Glass-forming component [% by mass] | SiO₂ [S] | 36 | 33 | 36 | 31 | 33 | 24 |
| | | Al₂O₃ [A] | 11 | 9 | 11 | 8 | 10 | 7 |
| | | CaO [C] | 2 | 5 | 2 | 4 | 2 | 1 |
| | | Fe₂O₃ [F] | 6 | 9 | 6 | 14 | 6 | 4 |
| | | Others | 5 | 4 | 5 | 3 | 5 | 3 |
| | | Subtotal [WG] | 60 | 60 | 60 | 60 | 55 | 40 |
| | Neutron radiation shielding component [% by mass] | Gd simple substance | 40 | 40 | 0 | 0 | 0 | 0 |
| | | Gd₂O₃ | 0 | 0 | 40 | 40 | 45 | 60 |
| | Mass ratio occupied by [S] + [A] in glass-forming component | | 0.77 | 0.69 | 0.77 | 0.65 | 0.77 | 0.77 |
| | Mass ratio of [S] with respect to [S] + [A] in glass-forming component | | 0.77 | 0.78 | 0.77 | 0.80 | 0.77 | 0.77 |
| | Mass ratio occupied by [F] in glass-forming component | | 0.11 | 0.15 | 0.11 | 0.23 | 0.11 | 0.11 |
| | Mass ratio occupied by [S] + [A] in final composition | | 0.46 | 0.42 | 0.46 | 0.39 | 0.43 | 0.31 |
| Characteristics | Spinnability | | A | C | A | C | A | C |
| | Flake processability | | a | c | a | c | a | c |
| | Amorphousness | | ○ | × | ○ | × | ○ | × |
| | Relative neutron radiation shielding rate compared to lead (N/N_{Pb}) | | 2221 | 2214 | 2239 | 2321 | 2672 | 4359 |

From a comparison of Example 10 and Comparative Example 2 and a comparison of Example 11 and Comparative Example 3, in a case where the content of the neutron shielding component is more than 35% by mass, neither fibers nor flakes are obtained from the inorganic composition when the mass ratio occupied by Fe₂O₃ in the glass-forming component is 0.15 or more. In addition, in a case where the content occupied by the neutron shielding component in the composition is more than 50% by mass, it is already clear that neither fibers nor flakes can be obtained even when the mass ratio occupied by Fe₂O₃ in the glass-forming component is less than 0.15.

### [Examples 13 to 17 and Comparative Example 5]

Similar tests were carried out using samarium simple substance and samarium oxide (Sm₂O₃) as the neutron shielding component. The results are shown together with the blending composition of the raw materials and the component composition of the final composition (Table 5).

The value of the relative neutron shielding rate with respect to lead (N/N_{Pb}) was calculated in the same manner as in Example 1 (bottom row in Table 5). In the same manner as in the case of using gadolinium simple substance and gadolinium oxide, satisfactory fibers and flakes were obtained even when samarium simple substance and samarium oxide were used (Examples 13 to 17). However, similarly to the case seen in Comparative Example 4, neither fibers nor flakes were obtained from the composition of Comparative Example 5 in which the content occupied by the neutron shielding component (samarium oxide) in the composition was more than 50% by mass.

**[Table 5]**

| Composition | | Abbreviated name | Example 13 | Example 14 | Example 15 | Example 16 | Example 17 | Comparativ e Example 5 |
|---|---|---|---|---|---|---|---|---|
| Raw material blending ratio | Glass-forming component [parts by mass] | FA1 | 30 | 40 | | | | |
| | | FA2 | | 10 | | | | |
| | | FA4 | 10 | | | | | |
| | | FA5 | | | 70 | 60 | 50 | 40 |
| | | CS | 20 | | | | | |
| | | BA | 30 | 30 | | | | |
| | Neutron radiation shielding component [parts by mass] | Sm simple substance | 10 | 20 | | | | |
| | | Sm₂O₃ | | | 30 | 40 | 50 | 60 |
| | Sum total [parts by mass] | | 100 | 100 | 100 | 100 | 100 | 100 |
| Components of final composition | Glass-forming component [% by mass] | SiO₂ [S] | 44 | 42 | 42 | 36 | 30 | 24 |
| | | Al₂O₃ [A] | 11 | 11 | 13 | 11 | 9 | 7 |
| | | CaO [C] | 8 | 9 | 3 | 2 | 2 | 1 |
| | | Fe₂O₃ [F] | 22 | 12 | 8 | 6 | 5 | 4 |
| | | Others | 5 | 6 | 6 | 5 | 4 | 3 |
| | | Subtotal [WG] | 90 | 80 | 70 | 60 | 50 | 40 |
| | Neutron radiation shielding component [% by mass] | Sm simple substance | 10 | 20 | | | | |
| | | Sm₂O₃ | | | 30 | 40 | 50 | 60 |
| | Mass ratio occupied by [S] + [A] in glass-forming component | | 0.62 | | 0.67 | | 0.77 | |
| | Mass ratio of [S] with respect to [S] + [A] in glass-forming component | | 0.80 | | 0.79 | | 0.77 | |
| | Mass ratio occupied by [F] in glass-forming component | | 0.24 | | 0.15 | | 0.11 | |
| | Mass ratio occupied by [S] + [A] in final composition | | 0.55 | 0.53 | 0.54 | 0.46 | 0.39 | 0.31 |
| Characteristic s | Spinnability | | A | A | A | A | A | C |
| | Flake processability | | a | a | a | a | a | c |
| | Amorphousness | | ○ | ○ | ○ | ○ | ○ | × |
| | Relative neutron radiation shielding rate compared to lead (N/N_{Pb}) | | 62 | 121 | 184 | 272 | 383 | 525 |

In Examples 18 and 19 and Comparative Examples 6 to 9 shown below, the resistance to radiation deterioration was also evaluated for each of the compositions in addition to the evaluation of spinnability of the composition. The evaluation of the resistance to radiation deterioration was carried out by Positron Annihilation Lifetime Spectroscopy (PALS) .

### [Example 19]

40 parts by mass of FA1, 10 parts by mass of FA2, 30 parts by mass of BA, and 5 parts by mass of CaCO₃ (reagent) as the glass-forming component, and 15 parts by mass of gadolinium oxide as the neutron shielding component were weighed, and a raw material formulation was prepared.

The components included in the present raw material formulation are gadolinium oxide: 15% by mass, SiO₂: 35% by mass, Al₂O₃: 9% by mass, CaO: 18% by mass, Fe₂O₃: 9% by mass, and others: 14% by mass.

A melt-spinning test was carried out for this raw material formulation. The results are shown in Table 6. Satisfactory fibers were obtained from the raw material formulation. Furthermore, the fibers were amorphous.

The value of the relative neutron shielding rate with respect to lead (N/N_{Pb}) was calculated in the same manner as in Example 1 (Table 6).

Next, a molten and solidified material of the raw material formulation was finely pulverized, and the fine pulverization product was divided into a sample for radiation irradiation and a non-radiation-irradiated sample.

The sample for radiation irradiation was irradiated with radiation of about 1.45 gigagray (GGy) using an electron beam as a radiation source to obtain a radiation-irradiated sample.

Positron lifetime measurement was carried out for each of the radiation-irradiated sample and the non-radiation-irradiated sample obtained in this manner, by using the apparatus shown in Fig. 4. Sodium chloride in which a portion of sodium was substituted with an isotope of sodium, ²²Na, was used as a positron beam source. In Fig. 4, the positron beam source (31) has a flat plate shape that measures 10 mm on each of the four sides and is wrapped with a titanium foil (not shown in the diagram). A first scintillator (32a) for measuring gamma rays is provided below the positron beam source (31), and a first photomultiplier tube (33a) is connected to the first scintillator (32a). A first pulse height discriminator (34a) is connected to the first photomultiplier tube (33a). The signal caught by the first scintillator (32a) passes through the first photomultiplier tube (33a) and the first pulse height discriminator (34a) is inputted to a data processor (35) through a first channel (36a). The data processing unit (35) includes a digital oscilloscope (37). Here, the first pulse height discriminator (34a) transmits a signal to the data processing unit (35) when the first pulse height discriminator (34a) detects a γ-ray of 1.28 MeV, which is emitted when ²²Na undergoes β-plus decay. By setting the digital oscilloscope (37), when a signal is inputted from the first channel (36a), the data processing unit (35) records the time (t0) and initiates time measurement at the same time.

A sample (S) to be submitted to the measurement of positron lifetime is accommodated in a sample support container (not shown in the diagram) holding a predetermined amount of a powder sample. A second scintillator (32b) is installed above the positron beam source (31) on which the sample (S) is placed. A second photomultiplier tube (33b) is connected to the second scintillator (32b). A second pulse height discriminator (34b) is connected to the second photomultiplier tube (33b). The signal caught by the second scintillator (32b) passes through the second photomultiplier tube (33b) and the second pulse height discriminator (34b) and is set to the data processor (35) through a second channel (36b). Here, the second pulse height discriminator (34b) sends a signal to the data processing unit (35) when the second pulse height discriminator (34b) detects a γ-ray of 0.511 MeV, which is emitted upon electron pair annihilation. The data processing unit (35) records the time of input from the second channel (36b).

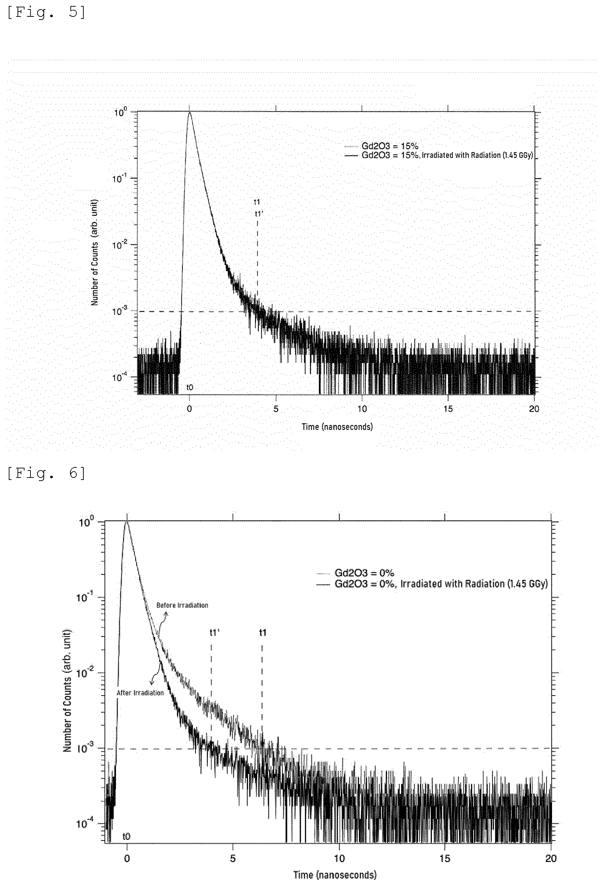

The above-described measurement was continued for about 24 hours, the number of counts of the γ-ray of 0.511 MeV was accumulated with respect to time, and a positron lifetime spectrum (PALS spectrum) was obtained (Fig. 5). Since this annihilation time spreads due to the difference in the travel distances of positrons, the time spectrum has a peak top at the measurement initiation time (t0), and the number of counts gradually decreases with the passage of time. Here, the time at which the number of counts became 10⁻³ with respect to the number of counts of the scintillator at the peak top time (t0) (normalized value: 1), was designated as the representative value (t1) of the annihilation time of the sample (hereinafter, the expression of the "representative value of the annihilation time" will be simply briefly referred to as "annihilation time").

Similar measurement was also carried out for the radiation-irradiated sample, and the PALS spectrum was obtained. The normalized PALS spectrum almost overlapped with the PALS spectrum of the non-radiation-irradiated sample. Therefore, the ratio (t1'/t1) of the annihilation time (t1') of the radiation-irradiated sample and the annihilation time (t1) of the non-radiation-irradiated sample is 1.0.

The test results in which the PALS spectra almost overlap even when the sample is irradiated with radiation and the value of t1'/t1 is 1.0, indicate that the microstructure of the present inorganic composition almost hardly changes before and after irradiation with radiation, that is, the present inorganic composition has excellent resistance to radiation deterioration.

### [Example 18]

75 parts by mass of FA5 and 15 parts by mass of CaCO₃ (reagent) as the glass-forming component, and 10 parts by mass of gadolinium oxide as the neutron shielding component were weighed, and a raw material formulation was prepared.

The components included in the present raw material formulation are gadolinium oxide: 10% by mass, SiO₂: 44% by mass, Al₂O₃: 14% by mass, CaO: 11% by mass, Fe₂O₃: 8% by mass, and others: 7% by mass.

A melt-spinning test was carried out for this raw material formulation. The results are shown in Table 6. Satisfactory fibers were obtained from the raw material formulation. Furthermore, the fibers were amorphous.

### [Example 19]

40 parts by mass of FA1, 10 parts by mass of FA2, 30 parts by mass of BA, and 5 parts by mass of CaCO₃ (reagent) as the glass-forming component, and 15 parts by mass of gadolinium oxide as the neutron shielding component were weighed, and a raw material formulation was prepared.

The components included in the present raw material formulation are gadolinium oxide: 15% by mass, SiO₂: 35% by mass, Al₂O₃: 9% by mass, CaO: 18% by mass, Fe₂O₃: 9% by mass, and others: 14% by mass.

A melt-spinning test was carried out for this raw material formulation. The results are shown in Table 6. Satisfactory fibers were obtained from the raw material formulation. Furthermore, the fibers were amorphous.

The value of the relative neutron shielding rate with respect to lead (N/N_{Pb}) was calculated (Table 6) in the same manner as in Example 1.

For a molten and solidified material, the PALS spectra of a non-radiation-irradiated sample and a radiation-irradiated sample were determined by the PALS method in the same manner as in Example 18. As a result, the PALS spectra of the non-radiation-irradiated sample (sample before irradiation with radiation) and the radiation-irradiated sample (sample after irradiation with radiation) almost overlapped (Fig. 5). Therefore, the ratio (t1'/t1) of the annihilation time (t1') of the radiation-irradiated sample and the annihilation time (t1) of the non-radiation-irradiated sample is 1.0.

### [Comparative Example 6]

16 parts by mass of SiO₂ (reagent), 4 parts by mass of Al₂O₃ (reagent), 2 parts by mass of Fe₂O₃ (reagent), 8 parts by mass of CaO (reagent), 1 part by mass of MgO (reagent), 1 part by mass of TiO₂ (reagent), and 1 part by mass of K₂CO₃ (reagent) were weighed, and a raw material formulation was prepared.

The components included in the present raw material formulation are SiO₂: 50% by mass, Al₂O₃: 12% by mass, CaO: 26% by mass, Fe₂O₃: 5% by mass, and others: 6% by mass.

Melt-spinning was attempted for this raw material formulation, and as a result, a yarn was obtained (Table 6). Incidentally, the molten material was amorphous.

For a molten and solidified material, the PALS spectra of a non-radiation-irradiated sample and a radiation-irradiated sample were determined in the same manner as in Example 18. As a result, changes in the PALS spectra of the non-radiation-irradiated sample and the radiation-irradiated sample were recognized (Fig. 6). That is, the annihilation time (t1') of the radiation-irradiated sample was shorter than the annihilation time (t1) of the non-radiation-irradiated sample. Specifically, the value of t1'/t1 was 0.6.

From the fact that changes occurred in the PALS spectra of the non-radiation-irradiated sample and the radiation-irradiated sample, it is speculated that certain changes occurred in the microstructure of the sample when irradiated with radiation.

### [Comparative Example 7]

75 parts by mass of FA5 and 18 parts by mass of CaCO₃ (reagent) as the glass-forming component, and 7 parts by mass of gadolinium oxide as the neutron shielding component were weighed, and a raw material formulation was prepared.

The components included in the present raw material formulation are gadolinium oxide: 7% by mass, SiO₂: 44% by mass, Al₂O₃: 14% by mass, CaO: 13% by mass, Fe₂O₃: 8% by mass, and others: 14% by mass.

Melt-spinning was attempted for this raw material formulation, and as a result, a satisfactory yarn was obtained. The obtained fiber was amorphous.

The value of the relative neutron shielding rate with respect to lead (N/N_{Pb}) was calculated in the same manner as in Example 1 (Table 6).

For a molten and solidified material, the PALS spectra of a non-radiation-irradiated sample and a radiation-irradiated sample were determined in the same manner as in Example 18. As a result, changes in the PALS spectra of the non-radiation-irradiated sample and the radiation-irradiated sample were recognized, in the same manner as shown in Comparative Example 6. However, the degree of change thereof was smaller than the degree of change shown in Comparative Example 6. The value of t1'/t1 was 0.7.

### [Comparative Example 8]

Tests were carried out in the same manner as in Comparative Example 7, except that the amount of CaCO₃ (reagent) was changed to 17 parts by mass, and the amount of gadolinium oxide was changed to 8 parts by mass. The results are shown in Table 6.

For a molten and solidified material, the PALS spectra of a non-radiation-irradiated sample and a radiation-irradiated sample were determined in the same manner as in Example 18. As a result, changes in the PALS spectra of the non-radiation-irradiated sample and the radiation-irradiated sample were recognized, in the same manner as shown in Comparative Example 6. However, the degree of change thereof was much smaller than the degree of change shown in Comparative Example 7. The value of t1'/t1 was 0.8.

### [Comparative Example 9]

35 parts by mass of FA5 and 5 parts by mass of H₃BO₃ (reagent) as the glass-forming component, and 60 parts by mass of gadolinium oxide as the neutron shielding component were weighed, and a raw material formulation was prepared.

Melt-spinning was attempted for this raw material formulation; however, a molten material just dripped down, and no yarn was obtained (Table 6).

Incidentally, from the XRD analysis, it was found that the molten material included a crystalline component.

The value of the relative neutron shielding rate with respect to lead (N/N_{Pb}) was calculated in the same manner as in Example 1 (Table 6).

No changes were recognized in the PALS spectra of the composition caused by irradiation with radiation. The value of t1'/t1 was 1.0.

**[Table 6]**

| Composition | | Abbreviated name, Name | Comparative Example 6 | Comparative Example 7 | Comparative Example 8 | Example 18 | Example 19 | Comparative Example 9 |
|---|---|---|---|---|---|---|---|---|
| Raw material blending ratio | Glass-forming component [parts by mass] | FA1 | | | | | 40 | |
| | | FA2 | | | | | 10 | |
| | | FA5 | | 75 | 75 | 75 | | 35 |
| | | BA | | | | | 15 | |
| | | CaCO₃ [Reagent] | | 18 | 17 | 15 | 20 | |
| | | SiO₂ [Reagent] | 16 | | | | | |
| | | Al₂O₃ [Reagent] | 4 | | | | | |
| | | Fe₂O₃ [Reagent] | 2 | | | | | |
| | | CaO [Reagent] | 8 | | | | | |
| | | MgO [Reagent] | 1 | | | | | |
| | | TiO₂ [Reagent] | 1 | | | | | |
| | | K₂CO₃ [Reagent] | 1 | | | | | |
| | | H₃BO₃ [Reagent] | | | | | | 5 |
| | Neutron shielding component [parts by mass] | Gd₂O₃ | 0 | 7 | 8 | 10 | 15 | 60 |
| | Sum total [parts by mass] | | 32 | 100 | 100 | 100 | 100 | 100 |
| Components of final composition | Glass-forming component [% by mass] | SiO₂[S] | 50 | 44 | 44 | 44 | 35 | 21 |
| | | Al₂O₃[A] | 12 | 14 | 14 | 14 | 9 | 6 |
| | | CaO[C] | 26 | 13 | 12 | 11 | 18 | 1 |
| | | Fe₂O₃[F] | 5 | 8 | 8 | 8 | 9 | 4 |
| | | Others | 6 | 14 | 14 | 7 | 14 | 8 |
| | | Subtotal [WG] | 100 | 93 | 92 | 84 | 85 | 40 |
| | Neutron shielding component [% by mass] | Gd₂O₃ | 0 | 7 | 8 | 10 | 15 | 60 |
| | Mass ratio occupied by [S] + [A] in glass-forming component | | 0.62 | 0.62 | 0.63 | 0.69 | 0.52 | 0.68 |
| | Mass ratio of [S] with respect to [S] + [A] | | 0.80 | 0.77 | 0.77 | 0.77 | 0.79 | 0.77 |
| | Mass ratio occupied by [F] in glass-forming component | | 0.05 | 0.09 | 0.09 | 0.10 | 0.11 | 0.09 |
| | Mass ratio occupied by [S] + [A] in final composition | | 0.58 | 0.58 | 0.58 | 0.61 | 0.45 | 0.27 |
| Characteris tics | Spinnability | | A | A | A | A | A | C |
| | Amorphousness | | ○ | ○ | ○ | ○ | ○ | × |
| | Relative neutron radiation shielding rate compared to lead (N/N_{Pb}) | | 2 | 299 | 344 | 400 | 686 | 4815 |
| | Resistance to radiation deterioration (t1'/t1) | | 0.6 | 0.7 | 0.8 | 1.0 | 1.0 | 1.0 |

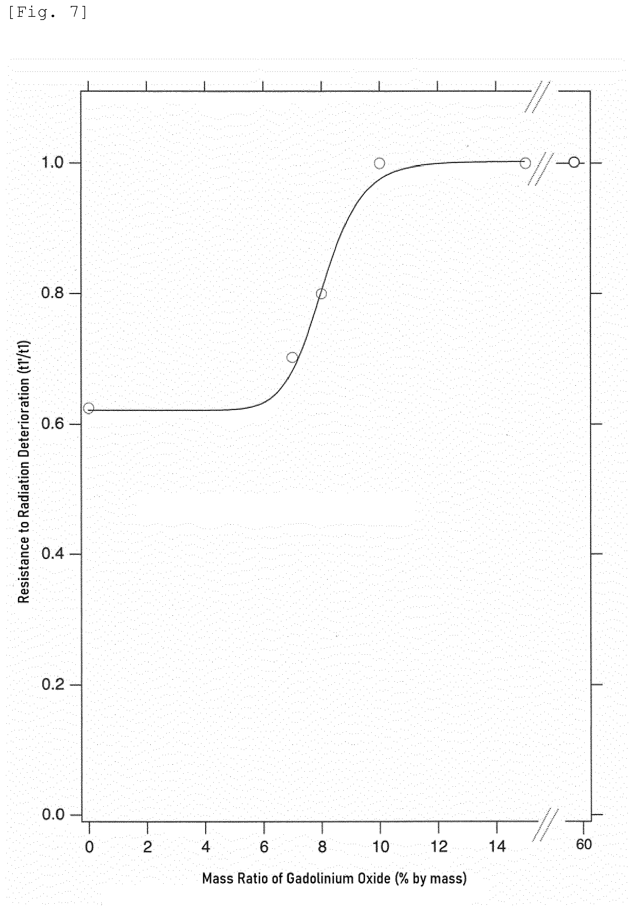

Fig. 7 is a graph showing the relationship between the gadolinium oxide content in the composition and the value of t1'/t1 (dimensionless), which can be called an index of the resistance to radiation deterioration, based on the results of Table 6. In a series of tests performed in Comparative Examples 6, 7, and 8 as described above, there were observed indications of improvement in the resistance to radiation deterioration as the content of the gadolinium oxide added to impart neutron shielding properties to the composition increases; however, an unexpected effect that when the content reaches 10% by mass or more, the composition is critically and completely resistant to radiation, is recognized.

Inorganic fibers were produced (sample I) from the inorganic composition of Example 18 (gadolinium oxide content: 10% by mass) by using a mass production facility. Similarly, inorganic fibers were produced (sample II) from the inorganic composition of Comparative Example 6 (gadolinium oxide content: 0% by mass). In addition, commercially available basalt fibers (sample III) and glass fibers (sample IV) were also prepared for comparison.

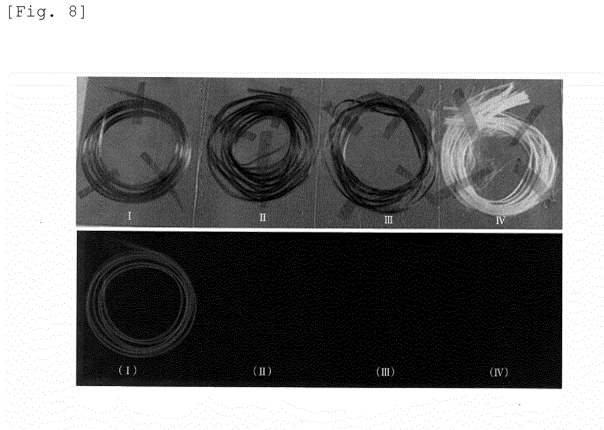

The above-described fiber samples from I to IV were arranged side by side in order on a test bench, and neutron radiographs were taken. In Fig. 8, sample I (gadolinium oxide content: 10% by mass), sample II (gadolinium oxide content: 0% by mass), sample III (basalt fibers), and sample IV (glass fibers) are shown in order from the left side in the upper row. The lower row of Fig. 8 shows neutron radiograph images obtained by simultaneously irradiating these samples with neutrons without changing the positions of the samples. In the diagram, from the left, (I), (II), (III), and (IV) correspond to the fiber samples from I to IV, respectively. From this, it is clearly shown that the fibers of sample I (gadolinium oxide content: 10% by mass) shield neutrons, while all the other fibers transmit neutrons.

### INDUSTRIAL APPLICABILITY

The inorganic composition of the invention has neutron shielding properties and is therefore useful as a material for members that are exposed to neutrons. Furthermore, the inorganic composition of the invention can be easily processed into fibers or flakes. Therefore, when the inorganic composition is compositized with resins, rubber, cement, and other materials, the inorganic composition can not only impart neutron shielding properties to these, but also function as a reinforcing material of the above-described materials due to the shape or flakes. Fibers are processed into chopped strands, rovings, and fiber sheets according to conventional methods.

As mentioned above, when flakes formed from the inorganic composition of the invention are added to a thermoplastic resin, the flakes are oriented in layers in the resin molded article due to the shear force generated in the injection molding process of the thermoplastic resin, and as a result, a neutron shielding effect is effectively exhibited. Similarly, when flakes formed from the inorganic composition of the invention are added to a coating material (lining material), due to the shear force applied to the coating material (lining material) in a coating process by a brush, a roller, or the like, the flakes in the coating film tend to be oriented in layers along the coating film surface. As a result, the neutron shielding effect per unit mass is excellent as compared with powdered or granular additives.

Since the inorganic composition of the invention is also excellent in terms of the resistance to radiation deterioration, even when a member to be exposed to neutrons is exposed to neutrons for a long time period, the fibers or flakes included in the member to be exposed to neutrons do not deteriorate, and therefore, there is an advantage that the function as a reinforcing material of the member is maintained for a long time period.

A material into which the inorganic composition of the invention, or fibers and flakes thereof are incorporated has excellent neutron shielding properties. Therefore, the material is suitable as a material constituting a member to be irradiated with neutron beams. Representative examples of parts to be irradiated with neutron beams include facilities, equipment, and members in each field of nuclear power, aerospace, and medicine.

Examples of facilities, equipment, and members in the field of nuclear power include:
· facilities, equipment, and members for nuclear power generation,
· facilities, equipment, and members that prevent critical reactions in operations related to the extraction and storage of debris (molten nuclear fuel),
· facilities, equipment, and members for mining and treatment of uranium ore,
· facilities, equipment, and member for secondary processing treatment of nuclear fuel (conversion, concentration, reconversion, molding processing, and MOX production of nuclear fuel),
· facilities, equipment, and members for storage, treatment, and retreatment of spent nuclear fuel,
· facilities, equipment, and members for storage, treatment, and disposal of neutron radiation-exposed wastes,
· transport equipment and members for uranium ore, second processed products of nuclear fuel, spent nuclear fuel, or neutron radiation-exposed wastes, and
· other nuclear-related facilities, equipment, and members.

More specific examples of the above-described facilities, equipment, and members for nuclear power generation include nuclear reactor buildings (including research reactors and test reactors), reactor containment vessels, piping in nuclear reactor facilities, and robots for decommissioning treatment.

Examples of the facilities, equipment, and members in the field of aerospace include:
· space base buildings, space stations, artificial satellites, planetary exploration satellites, and spacesuits.

Examples of the facilities, equipment, and members in the field of medicine include:
· medical apparatuses that utilize particle beams.

The above-described usage examples are given only for the purpose of demonstrating the usefulness of the inorganic composition of the invention and are not intended to limit the scope of the invention.

### EXPLANATIONS OF LETTERS OR NUMERALS

- 11: ELECTRIC FURNACE
- 12: TAMMANN TUBE
- 13: HANGING ROD
- 14: OPENING PART
- 15: FIBER
- D: OUTER DIAMETER OF ELECTRIC FURNACE
- H: HEIGHT OF ELECTRIC FURNACE
- d: DIAMETER OF ELECTRIC FURNACE OPENING PART
- 21: CRUCIBLE
- 22: TAMMANN TUBE
- 221: OPENING PART
- 222: MOUTH PART
- 23: ELECTRIC FURNACE
- D1: DIAMETER OF CRUCIBLE
- H1: HEIGHT OF CRUCIBLE
- D2: DIAMETER OF TAMMANN TUBE
- H2: HEIGHT OF TAMMANN TUBE
- Φ: DIAMETER OF OPENING PART
- fp: RAW MATERIAL FORMULATION, INORGANIC OXIDE FORMULATION
- fm: MOLTEN MATERIAL, INORGANIC OXIDE MOLTEN MATERIAL
- fb: BALLOON
- P: LOAD PRESSURE
- 31: POSITRON BEAM SOURCE
- 32a: SCINTILLATOR
- 32b: SCINTILLATOR
- 33a: PHOTOMULTIPLIER TUBE
- 33b: PHOTOMULTIPLIER TUBE
- 34a: PULSE HEIGHT DISCRIMINATOR
- 34b: PULSE HEIGHT DISCRIMINATOR
- 35: DATA PROCESSING UNIT
- 36a: FIRST CHANNEL
- 36b: SECOND CHANNEL
- 37: DIGITAL OSCILLOSCOPE
- S: SAMPLE

## Claims

1. An inorganic composition in an amorphous state,
the inorganic composition comprising:
i) 50% to 90% by mass of a glass-forming component containing SiO₂ and Al₂O₃ as main components; and
ii) 10% to 50% by mass of a neutron shielding component including gadolinium simple substance, gadolinium oxide (Gd₂O₃), samarium simple substance, samarium oxide (Sm₂O₃), cadmium simple substance, cadmium oxide (CdO), or a mixture thereof,
wherein iii) a mass ratio occupied by a sum total of SiO₂ and Al₂O₃ in the glass-forming component is 0.50 or more.

2. The inorganic composition according to claim 1, wherein a proportion occupied by the neutron shielding component in the inorganic composition is 20% by mass or more, and a mass ratio occupied by Fe₂O₃ in the glass-forming component is 0.25 or less.

3. The inorganic composition according to claim 1, wherein a proportion occupied by the neutron shielding component in the inorganic composition is more than 35% by mass, and a mass ratio occupied by Fe₂O₃ in the glass-forming component is less than 0.15.

4. The inorganic composition according to any one of claims 1 to 3, wherein the glass-forming component contains fly ash, clinker ash, or basalt.

5. The inorganic composition according to claim 4, wherein the glass-forming component is fly ash.

6. Fibers of the inorganic composition according to any one of claims 1 to 5.

7. Flakes of the inorganic composition according to any one of claims 1 to 5.

8. A material filled with the fibers according to claim 6.

9. The material according to claim 8, being a fiber-reinforced resin.

10. The material according to claim 8, being a fiber-reinforced cement.

11. A coating material comprising the flakes according to claim 7 as an admixture.

12. A neutron shielding member formed from the material according to claim 8.

13. A neutron shielding member coated with the coating material according to claim 11.

14. An inorganic fiber bundle obtained by attaching a sizing agent to the inorganic fibers according to claim 6,
wherein the sizing agent is any one of the following:
i) paraffin wax,
ii) microcrystalline wax,
iii) polyethylene or an ethylene copolymer mainly based on ethylene, and
iv) polypropylene.
